Europäisches Patentamt

European Patent Office

Office européen des brevets

(19)

(11) EP 0 940 931 B1

(12) EUROPÄISCHE PATENTSCHRIFT

(45) Veröffentlichungstag und Bekanntmachung des Hinweises auf die Patenterteilung:
**10.04.2002 Patentblatt 2002/15**

(51) Int Cl.$^7$: **H04B 7/005**, H04B 17/00

(21) Anmeldenummer: **99104174.0**

(22) Anmeldetag: **02.03.1999**

(54) **Verfahren zur Emulation von Mehrwegeschwund(Multipath-Fading)-Funkkanälen**

Method for emulating multipath fading radio channels

Procédé pour l'émulation de canaux radio à évanouissement multivoie

(84) Benannte Vertragsstaaten:
**DE FR GB IT**

(30) Priorität: **03.03.1998 DE 19808954**

(43) Veröffentlichungstag der Anmeldung:
**08.09.1999 Patentblatt 1999/36**

(73) Patentinhaber: **Deutsches Zentrum für Luft- und Raumfahrt e.V**
**53127 Bonn (DE)**

(72) Erfinder:
• **Höher, Peter Dr.**
**82211 Herrsching (DE)**
• **Steingass, Alexander**
**82205 Gilching (DE)**

(74) Vertreter: **von Kirschbaum, Albrecht, Dipl.-Ing.**
**Patentanwalt**
**Postfach 1520**
**82102 Germering (DE)**

(56) Entgegenhaltungen:
• **HOEHER P: "A STATISTICAL DISCRETE-TIME MODEL FOR THE WSSUS MULTIPATH CHANNEL" IEEE TRANSACTIONS ON VEHICULAR TECHNOLOGY,US,IEEE INC. NEW YORK, Bd. 41, Nr. 4, 1. November 1992 (1992-11-01), Seiten 461-468, XP000362361 ISSN: 0018-9545**
• **SHEIN N P: "AN ALGORITHM FOR GENERATING NONUNIFORMLY SPACED CORRELATED SAMPLES FOR SIMULATING A NONSELECTIVE RAYLEIGH FADING CHANNEL" PROCEEDINGS OF THE MILITARY COMMUNICATIONS CONFERENCE. (MILCOM),US,NEW YORK, IEEE, Bd. -, 1991, Seiten 291-294, XP000273505 ISBN: 0-87942-691-8**
• **SCHULZE H: "STOCHASTIC MODELS AND DIGITAL SIMULATION OF MOBILE CHANNELS" PROCEEDINGS KLEINHEUBACHER BERICHTE, Bd. 32, 1989, Seiten 473-483, XP000885995**
• **PÄTZOLD M: "ON THE STATISTICAL PROPERTIES OF DETERMINISTIC SIMULATIONS MODELS FOR MOBILE FADING CHANNELS" IEEE TRANSACTIONS ON VEHICULAR TECHNOLOGY, US, IEEE INC. NEW YORK, Bd. 47, Nr. 1, 1. Februar 1998 (1998-02-01), Seiten 254-269, XP000882997**

**Beschreibung**

Die Erfindung betrifft ein Verfahren zur Emulation von Mehrwegeschwund(Multipath Fading)-Funkkanälen gemäß dem Oberbegriff des Patentanspruchs 1.

Mobile Funkkommunikationskanäle lassen sich als stochastische zeitvariante Mehrwege-Kanäle gut modellieren. Die einfachste Klasse von Kanälen ergibt sich aus den Annahmen, daß der stochastische Prozeß "stationär im weitesten Sinne" ist, und daß die Echos unkorreliert sind.

Dieses Kanalmodell ist als WSSUS(Wide-Sense Stationary Uncorrelated Scattering)-Modell bekannt, das von P.A. Bello im Aufsatz "Characterization of Randomly Time-Variant Linear Channels" in "IEEE Trans. Commun. Syst.", Vol. CS-11, Seiten 360-393, Dezember 1963 beschrieben wurde. Es wird dort eine lineare Überlagerung von unkorrelierten Echos angenommen. Jeder beliebige WSSUS-Prozeß wird vollständig durch die zweidimensionale Wahrscheinlichkeitsdichtefunktion der Laufzeiten und Dopplerverschiebungen, die sogenannte Streufunktion, charakterisiert.

Als Näherungvorschläge eines WSSUS-Prozesses sind zahlreiche Modelle bekannt geworden, die auf der Summe von Sinoiden nach Rice beruhen und für eine Rechnersimulation geeignet sind. Von besonderer Bedeutung ist hierunter die Arbeit von H. Schulze: "Stochastic Models and Digital Simulation of Mobile Channels" in "Proc. Kleinheubacher Berichte", Vol. 32, Seiten 473-483, 1989, worin ein deterministisches Modell auf der Grundlage des Monte Carlo-Modells ausgeführt wird.

Es ist anerkannt, daß das bekannte deterministische Monte Carlo-Modell anschaulich, flexibel und leicht auszuführen ist. Ein stochastisches Monte Carlo-Modell sowie ein äquivalentes zeitdiskretes Monte Carlo-Modell sind in der Arbeit von P. Hoeher: "A Statistical Discrete-Time Model for the WSSUS Multipath Channel" in "IEEE Trans. Veh. Techn.", Vol. VT-41, Seiten 461-468, November 1992 bzw. in der Arbeit von U. Dersch und W.R. Braun: "Physical Mobile Radio Channel Model" in "IEEE Trans. Veh. Techn.", Vol. VT-40, Seiten 472-482, Mai 1991 abgehandelt.

Für manche Zwecke, z.B. bei Bitfehlerraten-Simulationen für flache Schwundkanäle, ist nur eine geringe Anzahl (in der Größenordnung von 10.....25) von Realisierungen erforderlich. Jedoch wäre insbesondere zur Anpassung an statistische Eigenschaften höheren Grades, z.B. die Pegelüberschreibungsrate, eine große Anzahl von Realisierungen (in der Größenordnung von mehreren hundert) beim Modell nach Schulze erforderlich, wie in den Aufsätzen von M. Pätzold et al: "On the Statistical Properties of Deterministic Simulation Models for Mobile Fading Channels" in "IEEE Trans. Veh. Techn.", September 1995 sowie "On the Problems of Monte Carlo Method Based Simulation Models for Mobile Radio Channels" in "Proc. IEEE Int. Symp. on Spread Spectrum Techn. and Appl.", Mainz, Seiten 1214-1220, September 1996 erläutert ist. In diesen Aufsätzen wurden deswegen andere deterministische Modelle vorgeschlagen.

Zunächst wird auf die erwähnten bekannten Modelle von Schulze und Pätzold eingegangen. Zur Vereinfachung wird bei allen folgenden mathematischen Ausdrücken von der komplexen Basisband-Notation Gebrauch gemacht.

Mit $f(\tau,t)$ wird die Impulsantwort eines linearen WSSUS-Kanals bezeichnet. Die Autokorrelationsfunktion von $f(\tau,t)$ ist gegeben durch

$$R_{ff}(\tau,\Delta t) = E[f(\tau,t)f^*(\tau,t+\Delta t)]. \tag{1}$$

Die Streufunktion wird durch Einführen der Fourier-Transformation in bezug auf $\Delta t$ erhalten:

$$P_S(\tau, f_D) = \int_{-\infty}^{\infty} R_{ff}(\tau, \Delta t)e^{-j2\pi f_D \Delta t}d\Delta t. \tag{2}$$

Die Streufunktion ist proportional zur zweidimensionalen Wahrscheinlichkeitsdichtefunktion $p(\tau, f_D)$ der Laufzeiten $\tau$ und den Dopplerverschiebungen $f_D$. Das Dopplerspektrum

$$S_{f_D}(f_D) = \int_{0}^{\tau_{max}} P_s(\tau, f_D)d\tau \tag{3}$$

und das Laufzeitleistungsspektrum

$$S_\tau(\tau) = \int_{-f_{D_{max}}}^{f_{D_{max}}} P_s(\tau, f_D) d\tau \qquad (4)$$

werden durch Integration der Streufunktion in bezug auf $\tau$ bzw. $f_D$ erhalten.

Von Schulze wurde nachgewiesen, daß

$$f(\tau, t) = \lim_{N \to \infty} \frac{1}{\sqrt{N}} \sum_{n=1}^{N} \exp\left( j \left( \underbrace{\Theta_n}_{\text{Phase}} + \underbrace{2\pi f_{D_n} t}_{\text{Doppler}} \right) \right) \cdot \underbrace{\delta(\tau - \tau_n)}_{\text{Laufzeit}} \qquad (5)$$

eine exakte Darstellung des WSSUS-Kanals für jede gegebene Streufunktion vorsieht. Die fortlaufenden Zufallszahlen $\Theta_n (0 \leq \Theta_n \leq 2\pi)$, $\tau_n (0 \leq \tau_n \leq \tau_{max})$ und $f_{D_n} (-f_{D_{max}} < f_{D_n} < f_{D_{max}})$ müssen nicht a-priori erzeugt werden, d.h. vor dem Simulationsablauf, wobei $p(\tau, f_D) \sim P_S(\tau, f_D)$ und $p(\Theta) = 1/2\pi$ ist.

Eine anschauliche Interpretation der Gleichung (5) besteht darin, daß $f(\tau, t)$ eine inkohärente Überlagerung von $N$ Echos ist, wobei jedes Echo durch eine Zufallsphase $\Theta_n$, eine Zufallslaufzeit $\tau_n$ und eine Zufalls-Dopplerverschiebung $f_{D_n}$, $1 \leq n \leq N$ gekennzeichnet ist. Der Faktor $\sqrt{1/N}$ stellt sicher, daß die Durchschnittsenergie eins ist; dieser Faktor ist für alle Echos und Spektren der gleiche. Gemäß dem zentralen Grenzwerttheorem (z.B. wenn N>6) ist $f(\tau, t)$ ein Gauß'scher Prozeß, weswegen seine Amplitude Rayleigh-verteilt ist.

Ein Rice'scher Kanal läßt sich durch Hinzufügen einer Konstanten zur Rayleigh-Komponenten modellieren. Ein Rice'scher Kanal wird genauso wie andere Wahrscheinlichkeitsverteilungsfunktionen, die zur Modellierung der Amplitudenverteilung von Schwundsignalen benutzt werden, im weiteren nicht betrachtet. Wird die Fourier-Transformation von $f(\tau, t)$ in bezug auf $\tau$ vorgenommen, dann erhält man die zeitvariante Frequenzantwort in Form von

$$F(\tau, t) = \lim_{N \to \infty} \frac{1}{\sqrt{N}} \sum_{n=1}^{N} \exp\left( j \left( \underbrace{\Theta_n}_{\text{Phase}} + \underbrace{2\pi f_{D_n} t}_{\text{Doppler}} - \underbrace{2\pi \tau_n f}_{\text{Laufzeit}} \right) \right) . \qquad (6)$$

Diese Gleichung ist besonders attraktiv für die Kanalemulation von Mehrträger-Mobilfunksystemen.

Es wird nun auf die Gleichungen (5) und (6) als das bekannte deterministische Monte Carlo-Modell Bezug genommen. Die entsprechende diskrete Version wird durch Setzen von $t = kT_S$ und $f = mF$ erhalten, wobei $1/T_S$ und $1/F$ die zeitlichen bzw. frequenzmäßigen Abtastraten und $k$ sowie $m$ die entsprechenden Zeit- bzw. Frequenzindizes sind. $T_S$ ist hierbei beispielsweise die Symboldauer und $F$ der Trägerabstand.

Zur Kanalemulation ist der untere Grenzwert $N = 7$. Die empfohlene Anzahl von Echos hängt von der Anwendung, der geforderten Genauigkeit und von dem den Parametersatz $\{\Theta_n, f_{D_n}, \tau_n\}$ erzeugenden Modell ab. Die Statistik läßt sich verbessern (oder $N$ kann verringert werden), wenn von Zeit zu Zeit neue Parametersätze erzeugt werden. Ein solcher Kanalemulator wird als ursprüngliches stochastisches Monte Carlo-Modell bezeichnet.

Ein neuer Parametersatz kann für jeden $m$-ten Block, $m \geq 1$, beispielsweise etwa 100-mal pro Simulation berechnet werden. Die erwähnten bekannten Kanalemulatoren sind periodisch und erzeugen ein aus Linien bestehendes Doppler/Laufzeit-Leistungsspektrum, wogegen das stochastische Monte Carlo-Modell nichtperiodisch und sein über eine unbegrenzte Anzahl von Parametersätzen gemitteltes Doppler/Laufzeit-Leistungsspektrum kontinuierlich ist.

Es ist festzustellen, daß im bekannten Modell nach Schulze in der Gleichung (5) die Echos komplexwertig sind. Aufgrund physikalischer Gründe müssen die Quadraturkomponenten jedes Echos die gleiche Laufzeit und die gleiche Dopplerverschiebung haben, was in mathematischer Sprache bedeutet, daß die Streumatrix für alle Kanäle diagonal ist.

Dies ist ein grundsätzlicher Gegensatz zu den bekannten, von Pätzold et al vorgeschlagenen Modellen, bei denen sich die Anzahl der Echos pro Inphase-Komponente von der Anzahl der Echos pro Quadratur-Phasenkomponente unterscheidet. Da die Echos mit einer Dopplerverschiebung $f_{D_n}$ "drehen", sind in der Gleichung (5) die Quadratur-

Komponenten von $f(\tau, f_D)$ korreliert: Die Kreuzkorrelationsfunktion für flachen Schwund ($\tau_n = 0$) ist

$$R_{f_I f_q}(\Delta t) = \lim_{N \to \infty} \frac{1}{2N} \sum_{n=1}^{N} \sin\left(2\pi f_{D_n} \Delta t\right). \tag{7}$$

Die Kreuzkorrelation ist null für $\Delta t = 0$ und konvergiert gegen null für $N \to \infty$, wie gewünscht. Wie in der angegebenen Literaturstelle von P. Höher ausgeführt ist, lassen sich $\Theta_n$, $f_{D_n}$ und $\tau_n$ durch eine Funktionstransformation

$$v_n = g_v(u_n) = P_v^{-1}(u_n), \qquad 1 \leq n \leq N \tag{8}$$

erzeugen, worin $v_n$ eine Substitution für $\Theta_n$, $f_{D_n}$ und $\tau_n$ ist und $u_n \in (0,1)$ eine zufällige, gleichförmig verteilte Eingangsvariable und $g_{f_D}(u_n)$ eine speicherlose Nichtlinearität ist, welche die Inverse der gewünschten kumulativen Verteilungsfunktion ist.

Der Erfindung liegt die Aufgabe zugrunde, den WSSUS-Kanal, wie er in der Gleichung (5) angegeben ist, dadurch anzunähern, daß das Verhältnis zwischen dem Leistungsvermögen und der Komplexität der Kanalmodellierung gegenüber dem Stand der Technik verbessert wird.

Diese Aufgabe wird bei einem gattungsgemäßen Emulationsverfahren durch die im kennzeichnenden Teil des Patentanspruchs 1 angegebenen Merkmale gelöst. Aufgrund der erfindungsgemäßen Verwendung eines zufälligen bzw. eines deterministischen frequenzmodulierten Rasters anstelle eines amplitudenmodulierten Rasters lassen sich die statistischen Eigenschaften im Vergleich zu den bekannten und gewürdigten Kanalemulationen erheblich verbessern, insbesondere bei einer kleineren Anzahl von Echorealisierungen.

Deutliche Vorteile des modifizierten stochastischen Monte Carlo-Modells nach der Erfindung gegenüber dem bekannten deterministischen Monte Carlo-Modell bestehen in der durch ein Zufallsraster erhaltenen "kontrollierten Zufälligkeit" und in der Erzeugung neuer Parametersätze von Zeit zu Zeit.

Wenn die Anzahl der Parametersätze unbegrenzt ist, dann ist der Emulator nichtperiodisch, sind die Laufzeit- und Doppler-Leistungsspektren kontinuierlich und ist die gewünschte Autokorrelationsfunktion vollständig angepaßt. Die Realzeit-Komplexität läßt sich dadurch herabsetzen, daß weniger Realisierungen notwendig sind.

Zweckmäßige Weiterbildungen des Emulationsverfahren nach der Erfindung sind in den Unteransprüchen angegeben.

Das Verfahren zur Emulation eines Mehrwegeschwund-Kanals nach der Erfindung wird im folgenden weiter erläutert. Zunächst wird ein modifiziertes Monte Carlo-Modell mit "Zufallsraster" betrachtet. Bei den ursprünglichen Monte Carlo-Modellen ist $u_n \in (0,1)$ eine gleichmäßig verteilte Zufallsvariable. Es besteht kein Raster. Für eine sehr kleine Anzahl von Echos ist die Statistik natürlich unzureichend.

Deswegen wird gemäß der Erfindung vorgeschlagen, die Monte Carlo-Modelle durch Einführen eines "Zufallsrasters" abzuwandeln. Das Intervall (0,1) kann in $N$ Subintervalle der Länge $1/N$ unterteilt werden. Für jedes Subintervall wird der Emulator angehalten, genau eine gleichmäßig verteilte Zufallsvariable $u'_n \in (0,1/N)$, $1 \leq n \leq N$, zu erzeugen. Es wird definiert:

$$u_n = u'_n + (n-1)/N. \tag{9}$$

Es ist festzustellen, daß $u_n$ wiederum gleichmäßig in (0,1) verteilt ist, wie gewünscht. Somit wird ein modifiziertes Monte Carlo-Modell mit "kontrollierter Zufälligkeit" erreicht.

Aufgrund dieses Merkmals nähert die Ausgangszufallsvariable $v_n$ das gewünschte Doppler/Laufzeit-Leistungsspektrum schärfer an. Da die Zufallsvariablen aller drei Parametersätze $\{\Theta_n, f_{D_n}, \tau_n\}$ innerhalb jedes Satzes monoton anwachsen, müssen Permutationen z.B. innerhalb des zweiten und dritten Satzes angewandt werden.

Das "Zufallsraster" ist anwendbar auf deterministische Monte Carlo-Modelle und stochastische Monte Carlo-Modelle. Vorzugsweise wird die stochastische Version angewandt, d.h. die Gleichung (9) wird von Zeit zu Zeit innerhalb eines Simulationsdurchlaufs zufällig erzeugt.

Im folgenden wird ein deterministisches Modell mit frequenzmoduliertem Raster betrachtet. Das deterministische Eingangsraster $u_n$ ist gleichmäßig quantisiert:

$$u_n = \frac{\alpha(N)}{N} + (n-1)\Delta \quad \text{mit} \quad \Delta = \frac{N - 2\alpha(N)}{N(N-1)} \quad \text{und} \quad 1 \leq n \leq N. \tag{10}$$

Hierin ist $\Delta$ die Schrittgröße und $\alpha(N)$ ein einziger für eine gegebene Echozahl $N$ und Spektren zu optimierender Abstimmparameter. Das Ausgangsraster $v_n$ ist frequenzmoduliert gemäß der Gleichung (8): Die höchste Dichte ist dort, wo $p_u(v)$ sein Maximum hat. Der Ausgangsprozeß hat ein aus Linien bestehendes Doppler/Laufzeit-Leistungsspektrum.

Eine willkürliche Anzahl von Lösungen ist ausführbar, um $\alpha(N)$ zu optimieren. Eine Lösung für dieses skalare Quantisierungsproblem ist die sogenannte Lloyd-Max-Quantisierung. Eine andere Lösung wäre die Anpassung der Autokorrelationsfunktion $R_{ff}(\tau,\Delta t)$ nach der Gleichung (1) so streng wie möglich durch eine Replika $R_{ff}(\tau.\Delta t,N,\alpha(N))$ beispielsweise über die $L_2$-Norm, wie sie von Pätzold et al vorgestellt wurde:

$$\alpha_{opt}(N) = \arg\min_{\alpha} E^{(2)} = \arg\min_{\alpha} \sqrt{\int_0^{T_b} \left|R_{ff}(\tau, \Delta t) - \hat{R}_{ff}(\tau, \Delta t, N, \alpha(N))\right|^2 d\Delta t}, \quad \tau \text{ fest.} \quad (11)$$

Der Suchraum von $\alpha(N)$ muß in einen gültigen Bereich gezwungen werden. Für ein gegebenes endliches Intervall $T_0$ sollte der Schätzfehler $E^{(2)}$ nach null konvergieren, wenn die Echoanzahl $N$ ausreichend groß ist. Es sollte auch überprüft werden, daß $\alpha_{opt}(N)$ als Funktion von $N$ ausreichend glatt ist. Die Autokorrelationsfunktion ist von den Phasen $\Theta_n$ unabhängig.

Die Methode gleicher Flächen und die Methode exakter Dopplerspreizung, die beide von Pätzold et al betrachtet wurden, sind spezielle Fälle, bei denen $\alpha(N)=0$ bzw. $\alpha(N)=0,5$ gilt.

Bei einigen Anwendungen ist es ausreichend, die Autokorrelationsfunktion für bestimmte Argumente oder nur in bestimmten Bereichen anzupassen. Beispielsweise muß die Autokorrelationsfunktion für ein über einen Kanal mit schwachem Schwund übertragenes und durch einen herkömmlichen Demodulator detektiertes DPSK-Signal nur bei $t=T_S$ angepaßt werden, wobei $T_S$ die Symboldauer ist.

Für eine Mehrfach-Symbol-Detektion muß die Autokorrelationsfunktion bei $t=iT_S$ angepaßt werden, wobei $1 \leq i \leq K$ und $KT_S$ die Spanne des Detektors ist. $T_0$ sollte entsprechend gewählt werden. Das Endstück der Autokorrelationsfunktion ist nicht erheblich.

Vom Konzept her sollte die Gleichung (10) bei allen drei Parametern angewandt werden. Dabei ist bei der Phasenverwürfelung eine zufällige Phasenfolge entsprechend einem pseudodeterministischen Modell gegenüber einem rein deterministischen Modell äquidistanter Phasen vorzuziehen, da dann geringere Bitfehlerraten erreicht werden.

Anhand von Zeichnungen wird im folgenden das Verfahren zur Emulation eines Funkübertragungskanals nach der Erfindung erläutert. Es zeigen:

Fig. 1    ein grundsätzliches Blockschaltbild, in dem die Einführung von Nichtlinearitäten in das Kanalmodell dargestellt ist,

Fig.2    die Realisierung eines kontrollierten Zufalls pro Intervall,

Fig.3    die Realisierung eines deterministischen Modells,

Fig. 4    einen algorithmischen Ablaufplan,

Fig.5    einen Signallaufplan, und

Fig.6    untereinander die Blockschaltbilder eines linearen Übertragungssystems und eines äquivalenten zeitdiskreten Kanalmodells.

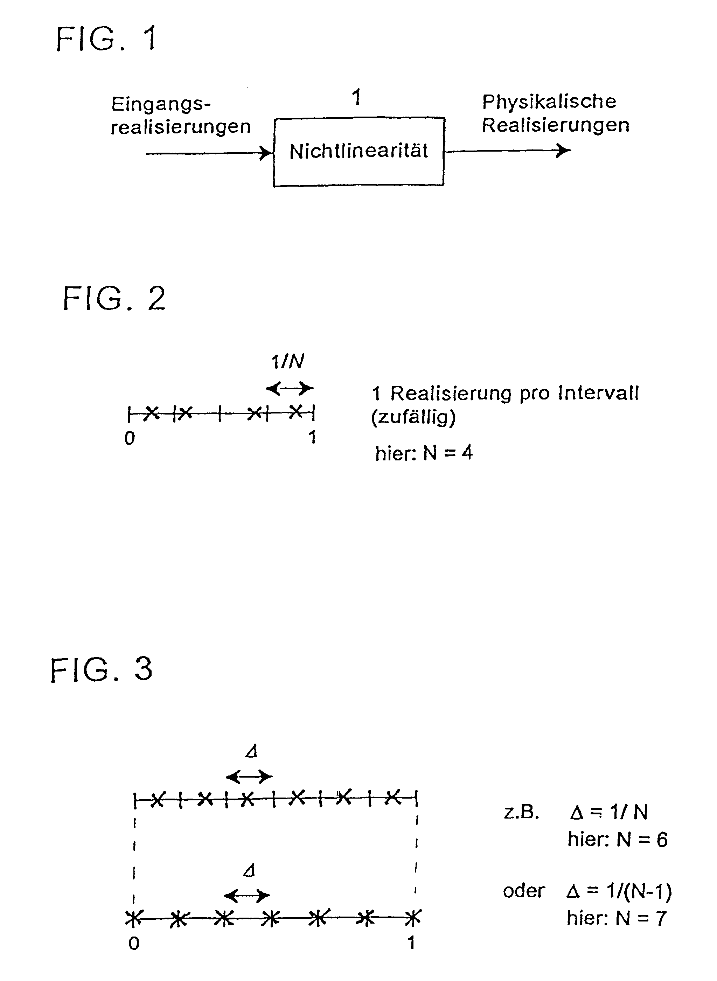

Wie in der Fig.1 dargestellt ist, werden im Emulationskanal die Eingangsrealisierungen der Doppler- und/oder Laufzeitspektren einer nichtlinearen Transformation 1 zugeführt, so daß aus einer gleichverteilten Zufallsvariablen eine zumindest angenähert beliebig verteilte Zufallsvariable erzeugt wird und sich somit die physikalischen Verhältnisse eines Übertragungskanals realistischer nachbilden lassen.

Fig.2 zeigt das Auswürfeln in "kontrolliert zufälliger" Weise. Beim Würfeln wird der Parametersatz (Zufallsphase $\Theta_n$, Zufallslaufzeit $\tau_n$ und Zufallsdopplerverschiebung $f_{D_n}$, $1 \leq n \leq N$) oder werden Elemente des Parametersatzes ausgewürfelt. Die Eingangsgröße der Nichtlinearität $u_n$ wird in $N$ Intervalle der Breite $1/N$ unterteilt. Pro Intervall wird genau ein Zufallswert (gleichverteilt) ausgewürfelt.

FIG. 3 zeigt das Auswürfeln in deterministischer Weise. Hierbei wird die Eingangsgröße der Nichtlinearität $u_n$ deterministisch festgelegt. Beispielsweise wird der Wertebereich (0,1) in $N$ äquidistante Intervalle der Breite 1/$N$ oder der Breite 1/($N$-1) aufgeteilt.

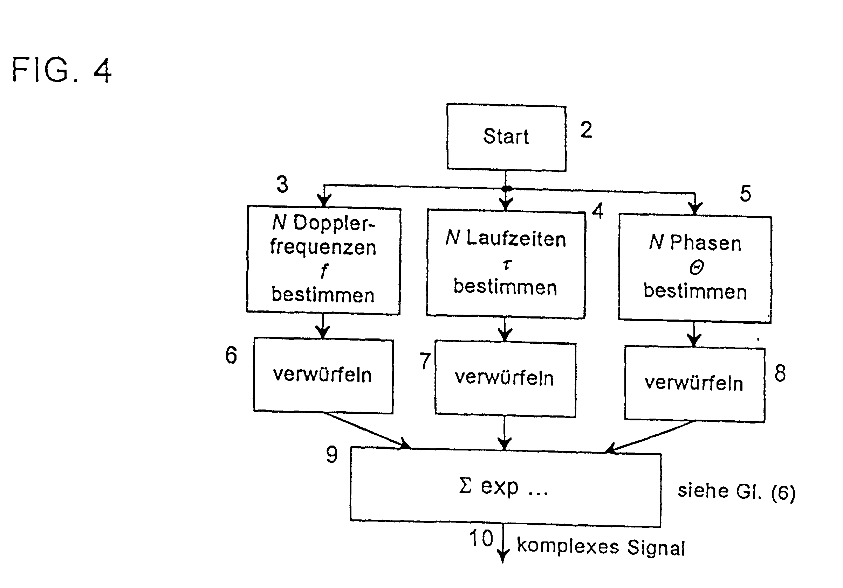

In Fig.4 ist ein algorithmischer Ablaufplan dargestellt. Nach dem Start in 2 werden parallel $N$ Dopplerfrequenzen $f_D$, $N$ Laufzeiten (Delays) $\tau$ und $N$ Phasen $\Theta$ in 3, 4 bzw. 5 bestimmt. Danach werden die bestimmten Dopplerfrequenzen $f_D$, Laufzeiten $\tau$ und Phasen $\Theta$ jeweils für sich entsprechend dem vorgesehenen Verfahren in 6, 7 und 8 verwürfelt und nach der Verwürfelung zu einer speziellen Summierung in 9 zusammengeführt, so daß dort eine zeitvariante Frequenzantwort gemäß der Gleichung (6) gebildet werden kann. Diese zeitvariante Frequenzantwort ist ein komplexes Signal 10 und emuliert beispielsweise einen Mehrträger-Mobilfunkkanal.

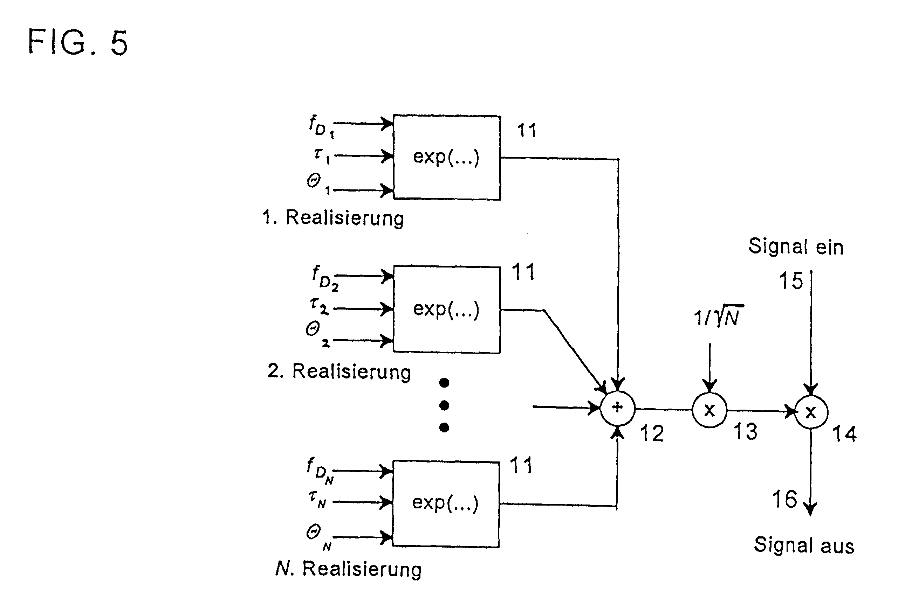

In der Fig.5 ist ein Signallaufplan mit $N$ Echorealisierungen dargestellt. Bei jeder Realisierung n = 1, 2,...,N wird in 11 zunächst die Funktion

$$\exp\left(j\left(\underset{\substack{\Leftrightarrow\\ Phase}}{\Theta_n} + \underset{\substack{\Leftrightarrow\\ Doppler}}{2\pi f_{D_n} t} - \underset{\substack{\Leftrightarrow\\ Laufzeit}}{2\pi \tau_n f}\right)\right)$$

der Gleichung (6) gebildet; danach wird in einer Summiereinrichtung 12 die Summe dieser Funktionen gebildet.

Anschließend wird diese Summe in einem Multiplizierer 13 mit dem Faktor $1/\sqrt{N}$ multipliziert und das dem Multiplizierer 13 entnommene Signal in einer Mischstufe 14 mit einem eingegebenen, simuliert zu übertragenden Signal 15 überlagert. Das der Mischstufe entnommene Ausgangssignal 16 entspricht in der Simulation weitgehend dem über einen äquivalenten Übertragungskanal tatsächlich übertragenen Signal.

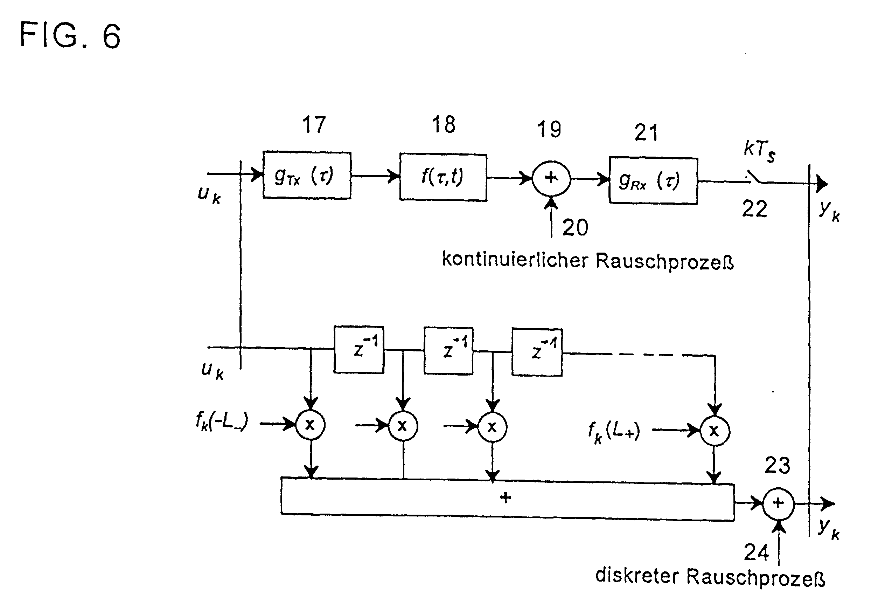

Der Gesamtkanal eines in der Fig.6 oben dargestellten linearen Übertragungssystems läßt sich durch ein äquivalentes zeitdiskretes Modell darstellen, wie es in der Fig.6 unten gezeigt ist.

Im linearen Übertragungssystem wird ein zu übertragendes Signal $u_k$ einem Sender 17 zugeführt, der eine Impulsantwort $g_{Tx}(\tau)$ aufweist, von diesem Sender 17 über eine Übertragungsstrecke 18 geschickt, welche die Kanalimpulsantwort $f(\tau,t)$ aufweist, in Form einer Summierung 19 von einem kontinuierlichen Rauschprozeß 20 überlagert, von einem Empfänger 21 empfangen, der die Impulsantwort $g_{Rx}(\tau)$ aufweist, über einen Abtastschalter 22 mit der Schaltdauer $kT_S$ ($k$ = Zeitindex, $T_S$ = Symboldauer) abgetastet und schließlich als detektiertes Signal $y_k$ abgenommen.

Das in Fig.6 unten dargestellte Modell umfaßt die Pulsformung im Sender und Empfänger, den physikalischen Kanal und die Abtastung. Die Absicht ist, die Koeffizienten des zeitdiskreten Kanals wirksam ohne Einführung irgendwelcher weiterer Vereinfachungen zu modellieren. Es wird dabei nicht angenommen, daß Echoraster und Abtastraster übereinstimmen, da ein physikalischer Kanal kein Echoraster besitzt, das gemäß dem Modell nach der Erfindung durch unquantisierte Zufallslaufzeiten(Time Delays) $\tau_n$ dargestellt wird. Deswegen sind die Koeffizienten im allgemeinen korreliert. Die häufig vorgenommene Annahme von unkorrelierten Koeffizienten ist eine Vereinfachung, genauso wie eine Zusammenballung von Echos.

Die Koeffizienten des äquivalenten zeitdiskreten Modells sind mit $f_k(l)$ bezeichnet, wobei $k$ der Zeitindex und $l$ der Abgriffindex ist, $-L_- \leq l \leq L_+$. Die berücksichtigte Anzahl der Koeffizienten ist $1+L_-+L_+$. Es wird dann erhalten:

$$f_k(l) = \lim_{N \to \infty} \frac{1}{\sqrt{N}} \sum_{n=1}^{N} \exp\left(j\left(\underset{\substack{\Leftrightarrow\\ Phase}}{\Theta_n} + \underset{\substack{\Leftrightarrow\\ Doppler}}{2\pi f_{D_n} kT_S}\right)\right) \cdot g_{total}\left(\underset{\substack{\Leftrightarrow\\ Laufzeit}}{lT_S - \tau_n}\right), \quad -L_- \leq l \leq L_+,$$

$$(12)$$

wobei $g_{total}(\tau) = g_{Tx}(\tau)^* \, g_{Rx}(\tau)$ die Gesamtimpulsantwort des Senders und des Empfängers ist. Das mit dem Modell nachgebildete detektierte Signal $y_k$ wird nach einer vorhergehenden Summierung 23 eines diskreten Rauschprozesses 24 am Ausgang abgenommen.

Es sind noch mehrere Abwandlungen und Weiterbildungen des durch die Erfindung angegebenen Modells möglich:

Es wurde angenommen, daß die gewünschten Doppler- und Laufzeitspektren kontinuierlich sind. Gewöhnlich in Hardware-Simulationen benutzte diskrete Abgriffe lassen sich aber genauso gut modellieren.

Bei Messungen werden manchmal gebündelte Echos beobachtet. Dieser Fall kann ebenso durch das Modellierungsverfahren gemäß der Erfindung erfaßt werden.

**Patentansprüche**

1. Verfahren zur Emulation von Mehrwegeschwund -Funkkanälen, insbesondere von Mobilfunk-Kommunikationskanälen, wobei von einem sogenannten WSSUS, Wide-Sense Stationary Uncorrelated Scattering, -Modell ausgegangen wird, bei dem die Kanalimpulsantwort durch die Gleichung

$$f(\tau, t) = \lim_{N \to \infty} \frac{1}{\sqrt{N}} \sum_{n=1}^{N} \exp\left(j\left(\underbrace{\Theta_n}_{Phase} + \underbrace{2\pi f_{D_n}t}_{Doppler}\right)\right) \cdot \underbrace{\delta(\tau - \tau_n)}_{Laufzeit}$$

und die durch die Fourier-Transformation dieser Gleichung erzeugte zeitrariante Frequenzantwort durch die Gleichung

$$F(\tau, t) = \lim_{N \to \infty} \frac{1}{\sqrt{N}} \sum_{n=1}^{N} \exp\left(j\left(\underbrace{\Theta_n}_{Phase} + \underbrace{2\pi f_{D_n}t}_{Doppler} - \underbrace{2\pi \tau_n f}_{Laufzeit}\right)\right)$$

dargestellt werden, wobei die Impulsantwort $f(\tau, t)$ als inkohärente Überlagerung von $N$ Echos angesehen werden kann, von denen jedes Echo durch einen aus einer Zufallsphase $\Theta_n$, einer Zufallslaufzeit $\tau_n$ und einer Zufallsdopplerverschiebung $f_{D_n}$, $1 \le n \le N$, bestehenden Parametersatz charakterisiert ist und der für alle Echos und Spektren gleiche Faktor $\sqrt{1/N}$ angibt, daß die mittlere Energie eins ist, unter Benutzung von Monte-Carlo-Modellen, bei denen der Parametersatz oder Elemente des Parametersatzes zufällig und in gleichmäßiger Verteilung deterministisch oder stochastisch mittels gleichverteilter nichtlinearer Eingangsvariablen $u_n \in (0,1)$ ausgewürfelt werden, **dadurch gekennzeichnet, daß** die benutzten Monte-Carlo-Modelle durch Verwendung eines frequenzmodulierten Ausgangsrasters $v_n$ modifiziert werden, das durch ein deterministisches oder ein zufälliges, durch die nichtlineare Eingangsvariable $u_n$ gebildetes Eingangsraster erzeugt wird.

2. Verfahren nach Anspruch 1, **dadurch gekennzeichnet, daß** unter Bezugnahme auf die im Anspruch 1 angegebenen, das ursprünglich deterministische Monte-Carlo-Modell betreffenden Gleichungen die entsprechende diskrete Version durch Setzen von $t = kT_s$ und $f = mF$ erhalten wird, wobei $1/T_s$ und $1/F$ die zeitlichen bzw. frequenzmäßigen Abtastraten und $k$ sowie $m$ die entsprechenden Zeit- bzw. Frequenzindizes sind, wenn $T_S$ hierbei beispielsweise die Symboldauer und $F$ der Trägerabstand ist.

3. Verfahren nach Anspruch 1 oder 2, **dadurch gekennzeichnet, daß** das Auswürfeln kontrolliert zufällig abläuft, indem das Intervall der nichtlinearen Eingangsvariablen $u_n$ in $N$ Subintervalle der Breite $1/N$ unterteilt wird und pro Subintervall genau ein Zufallswert $u_n \in (0,1 / N)$, $1 \le n \le N$, bei gleicher Verteilung ausgewürfelt wird gemäß

$$u_n = u_n' + (n - 1)/ N.$$

4. Verfahren nach einem der vorhergehenden Ansprüche, **gekennzeichnet durch** ein Neuauswürfeln der Parametersätze in festgelegten Zeitabständen, z.B. von Datenblock zu Datenblock.

5. Verfahren nach einem der Ansprüche 1 bis 3, **gekennzeichnet durch** langsam zeitveränderliche Parametersätze.

**6.** Verfahren nach einem der vorhergehenden Ansprüche, **gekennzeichnet durch** die Anwendung bei einem zeitdiskreten Funkübertragungsmodell, das eine Pulsformung im Sender und Empfänger, den physikalischen Kanal sowie die Abtastung umfaßt und mit dem die Koeffizienten $f_k(l)$ eines äquivalenten zeitdiskreten Kanals **durch** die folgende Gleichung modelliert werden:

$$f_k(l) = \lim_{N\to\infty} \frac{1}{\sqrt{N}} \sum_{n=1}^{N} \exp\left(j\left(\underbrace{\Theta_n}_{Phase} + \underbrace{2\pi f_{D_n} kT_S}_{Doppler}\right)\right) \cdot g_{total}(\underbrace{lT_S - \tau_n}_{Laufzeit}), \quad -L_- \le l \le L_+,$$

wobei $k$ der Zeitindex, $l$, $-L_- \le l \le L_+$, der Abgriffindex, die Anzahl der berücksichtigten Koeffizienten $1+L_-+L_+$ und $g_{total}(\tau) = g_{Tx}(\tau) * g_{Rx}(\tau)$ die Gesamtimpulsantwort des Senders und des Empfängers ist.

**7.** Verwendung eines Digitalrechners zur Implementierung des Verfahrens nach einem der vorhergehenden Ansprüche.

**8.** Verwendung eines Hardware-Simulators zur Implementierung des Verfahrens nach einem der Ansprüche 1 bis 6.

## Claims

**1.** A method for emulating multipath fading radio channels, more particularly mobile radio communications channels on the basis of a wide-sense stationary uncorrelated scattering (WSSUS) model in which the channel pulse response is given by the equation

$$f(\tau, t) = \lim_{N\to\infty} \frac{1}{\sqrt{N}} \sum_{n=1}^{N} \exp\left(j\left(\underbrace{\Theta_n}_{Phase} + \underbrace{2\pi f_{D_n} t}_{Doppler}\right)\right) \cdot \delta(\underbrace{\tau - \tau_n}_{Laufzeit})$$

and the time-variant frequency response generated Fourier transformation of this equation is given by

$$F(\tau, t) = \lim_{N\to\infty} \frac{1}{\sqrt{N}} \sum_{n=1}^{N} \exp\left(j\left(\underbrace{\Theta_n}_{Phase} + \underbrace{2\pi f_{D_n} t}_{Doppler} - \underbrace{2\pi \tau_n f}_{Laufzeit}\right)\right)$$

where the pulse response $f(\tau, t)$ can be viewed as being an incoherent heterodyne of $N$ echoes, each of which is **characterized by** a set of parameters consisting of a random phase $\Theta_n$, a random time delay $\tau_n$ and a random Doppler shift $fD_n$, $1 \le n \le N$ and stating the factor $\sqrt{1/N}$ the same for all echoes and spectra, the average energy being unity in making use of Monte Carlo models in which the set of parameters or elements thereof are scrambled randomly and in an even distribution deterministically or stochastically by means of evenly distributed non-linear input variables $u_n \in (0.1)$, **characterized in that** the Monte Carlo models employed are modified by using a frequency-modulated output raster $v_n$ generated by a deterministic or a random input raster formed by the non-linear input variable $u_n$.

**2.** The method as set forth in claim 1, **characterized in that** with reference to the equations as cited in claim 1 relating to the original deterministic Monte Carlo model the corresponding discrete version is obtained by setting $t = kT_S$

and $f = mF$, where $1/T_S$ and $1/F$ are the sampling rates in time and frequency and $k$ as well as $m$ are the corresponding time and frequency indices respectively, when $T_S$ in this respect is, for example, the symbol duration and F the carrier spacing.

3. The method as set forth in claim 1 or 2, **characterized in that** scrambling is in a controlled random sequence by the interval of the non-linear input variables $u_n$ being divided into $N$ sub-intervals $1/N$ wide and for each sub-interval precisely one random variable $u_n \in (0.1)$, $1 \le n \le N$ is scrambled in an even distribution in accordance with

$$u_n = u'_n + (n\text{-}1)/N.$$

4. The method as set forth in any of the preceding claims, **characterized by** re-scrambling the set of parameters into fixed time spacings, e.g. from data block to data block.

5. The method as set forth in any of the claims 1 to 3, **characterized by** slow time-variant sets of parameters.

6. The method as set forth in any of the preceding claims, **characterized by** its application in a time-discrete radio communications model comprising pulse shaping in the transmitter and receiver, the physical channel as well as sampling and with which the coefficients $f_k(1)$ of an equivalent time-discrete channel are modelled by the following equation

$$f_k(1) = \lim_{N \to \infty} \frac{1}{\sqrt{N}} \sum_{n=1}^{N} \exp\left(j\left(\underbrace{\Theta_n}_{\text{Phase}} + \underbrace{2\pi f_{D_n} k T_S}_{\text{Doppler}}\right)\right) \cdot g_{total}\left(\underbrace{1 T_S - \tau_n}_{\text{Laufzeit}}\right), \quad -L_- \le 1 \le L_+$$

where $k$ is the time index and $l$ is the pick-off index, $-L_- \le 1 \le L_+$ the number of coefficients taken into account is $1 + L_- + L_+$ and $g_{total}(\tau) = g_{Tx}(\tau)^* g_{Rx}(\tau)$ is the total pulse response of the transmitter and of the receiver.

7. Use of a digital computer for implementing the method as set forth in any of the preceding claims.

8. Use of hardware simulator for implementing the method as set forth in any of the claims 1 to 6.

**Revendications**

1. Procédé pour l'émulation de canaux hertziens à évanouissement multivoie, notamment de canaux de communications radio mobiles, selon lequel on part d'un modèle dit WSSUS, wide-sense-stationary uncorrelated scattering, selon lequel la réponse impulsionnelle du canal est représentée par la relation

$$f(\tau, t) = \lim_{N \to \infty} \frac{1}{\sqrt{N}} \sum_{n=1}^{N} \exp\left(j\left(\underbrace{\Theta_n}_{\text{Phase}} + \underbrace{2\pi f_{D_n} t}_{\text{Doppler}}\right)\right) \cdot \delta(\tau - \tau_n) \underbrace{}_{\substack{\text{Temps de} \\ \text{transit}}}$$

et la réponse en fréquence, variable dans le temps, qui est produite par la transformation de Fourier de cette équation, est représentée par l'équation

$$F(\tau, t) = \lim_{N \to \infty} \frac{1}{\sqrt{N}} \sum_{n=1}^{N} \exp\left( j \left( \underbrace{\Theta_n}_{Phase} + \underbrace{2\pi f_{D_n} t}_{Doppler} - \underbrace{2\pi \tau_n f}_{Temps\ de\ transit} \right) \right)$$

la réponse impulsionnelle ft(t) pouvant être considérée comme une superposition incohérente de N échos, chacun de ces échos est **caractérisé par** un ensemble de paramètres constitué par une phase aléatoire $\Theta_n$, un temps de transit aléatoire $\tau_n$ et un décalage Doppler aléatoire $F_{Dn}$, avec $1 \le n \le N$, et indiquant le facteur $\sqrt{1/N}$ identique pour tous les échos et les spectres, et dans lequel l'énergie moyenne est un, moyennant l'utilisation de modèles de Monte-Carlo, dans lequel l'ensemble de paramètres ou des éléments de l'ensemble de paramètres sont décomposés de façon aléatoire et de façon déterministe selon une distribution uniforme ou de façon stochastique à l'aide de variables d'entrée non linéaires à distribution uniforme ($U_n \in 0,1$), **caractérisé en ce que** les modèles de Monte-Carlo utilisés sont modifiés par l'utilisation d'une trame de sortie $v_n$ modulée en fréquence, qui est produite par une trame d'entrée déterministe ou une trame d'entrée aléatoire, formée par la variable d'entrée non linéaire $u_n$.

2. Procédé selon la revendication 1, **caractérisé en ce qu'**en référence aux équations considérées indiquées dans la revendication 1 et concernant le modèle initialement déterministe de Monte-Carlo, une inversion discrète correspondante est obtenue par positionnement de $t = kT_S$ et $f = mF$, $1/T_S$ et $1/F$ étant les cadences d'échantillonnage temporelles ou fonction de la fréquence et k ainsi que m étant les indices correspondants du point de vue du temps et de la fréquence, alors que $T_S$ est par exemple la durée de symbole et F la distance entre porteuses.

3. Procédé selon la revendication 1 ou 2, **caractérisé en ce que** la sélection se déroule de façon aléatoire d'une manière contrôlée par le fait que l'intervalle des variables d'entrée non linéaires $u_n$ est divisé en N sous-intervalles ayant pour largeur 1/N et pour chaque sous-intervalle, précisément une valeur aléatoire ($u_n \in 0,1/n$) $\le n \le N$, pour une même distribution est décomposée conformément à

$$u_n = u'_n + (n + 1)/N$$

4. Procédé selon l'une des revendications précédentes, **caractérisé par** une nouvelle décomposition des ensembles de paramètres dans des intervalles de temps fixés, par exemple de bloc de données à bloc de données.

5. Procédé selon l'une des revendications 1 à 3, **caractérisé par** des ensembles de paramètres à variation lente dans le temps.

6. Procédé selon l'une des revendications précédentes, **caractérisé par** l'utilisation dans un modèle de transmission radio discret dans le temps, qui comprend une mise en forme d'impulsions dans l'émetteur et dans le récepteur, le canal physique ainsi que l'échantillonnage, et avec lequel les coefficients $f_k(l)$ d'un canal équivalent discret dans le temps sont modélisés par la relation suivante :

$$f_k(l) = \lim_{N \to \infty} \frac{1}{\sqrt{N}} \sum_{n=1}^{N} \exp\left( j \left( \underbrace{\Theta_n}_{Phase} + \underbrace{2\pi f_{D_n} kT_S}_{Doppler} \right) \right) \cdot g_{total} \underbrace{(lT_S - \tau_n)}_{Temps\ de\ transit},$$

$$-L_- \le l \le L_+,$$

k étant l'indice temporel, l, $-L_- \le n \le L_+$, étant l'indice de prise, le nombre des coefficients pris en compte étant $1 + L_- + L_+$, et $g_{total}(\tau) = g_{Tx}(\tau) * g_{Rx}(\tau)$ étant la réponse impulsionnelle totale de l'émetteur et du récepteur.

**7.** Utilisation d'un calculateur numérique pour la mise en oeuvre du procédé selon l'une des revendications précédentes.

**8.** Utilisation d'un simulateur matériel pour la mise en oeuvre du procédé selon l'une des revendications 1 à 6.

# FIG. 1

Eingangsrealisierungen

1

Nichtlinearität

Physikalische
Realisierungen

# FIG. 2

1/N

1 Realisierung pro Intervall
(zufällig)

0                1

hier: N = 4

# FIG. 3

Δ

z.B.    Δ = 1/ N
        hier: N = 6

Δ

0                           1

oder    Δ = 1/(N-1)
        hier: N = 7

# FIG. 4

```
                    ┌──────────┐
                    │  Start   │ 2
                    └──────────┘
      3         │         │         │        5
      ↓         │         │         │        ↓
┌──────────────┐│ ┌──────────────┐ │┌──────────────┐
│ N Doppler-   ││ │ N Laufzeiten │ ││ N Phasen     │
│ frequenzen   ││ │      τ    4  │ ││     Θ        │
│      f       ││ │  bestimmen   │ ││  bestimmen   │
│  bestimmen   ││ └──────────────┘ │└──────────────┘
└──────────────┘        │                 │
       │                │                 │
   6   ↓            7   ↓                  ↓
┌──────────────┐  ┌──────────────┐  ┌──────────────┐
│  verwürfeln  │  │  verwürfeln  │  │  verwürfeln  │ 8
└──────────────┘  └──────────────┘  └──────────────┘
         \              │              /
      9   \             ↓             /
        ┌─────────────────────────────────┐
        │         Σ exp ...               │   siehe Gl. (6)
        └─────────────────────────────────┘
                 10 │ komplexes Signal
                    ↓
```

EP 0 940 931 B1

FIG. 5

# FIG. 6